# FASCICULE DE BREVET EUROPEEN

(11) **EP 0 574 498 B1**
(45) Date de publication et mention de la délivrance du brevet: **14.12.1994**
(21) Numéro de dépôt: 92907266.8
(22) Date de dépôt: 06.03.1992
(51) Int. Cl.: G02B 26/02

(54) **DISPOSITIF DE COMMUTATION OPTIQUE A FIBRES OPTIQUES ET A OBTURATEUR ESCAMOTABLE**
ANORDNUNG ZUM OPTISCHEN SCHALTEN MIT GLASFASERN UND MIT AUSKLAPPBARER VERSCHLUSSBLENDE
OPTICAL SWITCHING DEVICE WITH RETRACTABLE SHUTTTER FOR OPTICAL FIBRES

(30) Priorité: 08.03.1991 FR 9102833
(43) Date de publication de la demande: 22.12.1993
(73) Titulaire: COMMISSARIAT A L'ENERGIE ATOMIQUE, 75015 Paris (FR)
(72) Inventeur: DURAND, Michel, F-33510 Andernos (FR); TCHERNIAEFF, Alexandre, F-33700 Mérignac (FR)
(74) Mandataire: Signore, Robert
(86) Numéro de dépôt international: FR9200208
(87) Numéro de publication internationale: WO9215912

(56) Documents cités:
- EP-A- 0 106 172
- EP-A- 0 115 126
- WO-A-88/02869
- GB-A- 2 200 222

## Description

La présente invention concerne un dispositif de commutation optique prévu pour établir ou interrompre une liaison optique entre des fibres optiques, ce dispositif comprenant :
- un premier support prévu pour recevoir une première fibre optique,
- un deuxième support prévu pour recevoir une deuxième fibre optique, l'axe de cette dernière étant alors confondu avec l'axe de la première fibre optique, et
- un obturateur mobile, interposable entre les première et deuxième fibres optiques lorsque celles-ci sont respectivement montées sur les premier et deuxième supports, cet obturateur étant apte à occuper :
   - une première position dans laquelle il est interposé entre les première et deuxième fibres optiques et empêche alors le passage de lumière d'une fibre à l'autre, et
   - une deuxième position dans laquelle il est escamoté et permet alors ce passage de lumière.

L'invention s'applique notamment à la transmission d'informations par fibres optiques.

On connaît déjà, par le document EP-A-0066218, un dispositif de commutation optique du genre de celui qui est mentionné plus haut.

Dans ce dispositif connu, les supports des fibres optiques sont fixes l'un par rapport à l'autre et les fibres optiques sont éloignées l'une de l'autre.

Ce dispositif connu présente l'inconvénient de conduire à des pertes de lumière lorsqu'il est dans un état permettant le passage d'un faisceau lumineux d'une fibre optique à l'autre.

La présente invention a pour but de remédier à cet inconvénient.

L'invention résout le problème de l'obtention d'un dispositif de commutation optique dans lequel la transmission de lumière a lieu avec des pertes nettement inférieures à celles qui se produisent dans le dispositif connu, mentionné plus haut.

Pour résoudre ce problème, le dispositif de commutation optique objet de l'invention est caractérisé en ce que le deuxième support est déplaçable en translation par rapport au premier support, parallèlement à l'axe des fibres optiques, entre
- une première position dans laquelle la deuxième fibre optique est proche de la première fibre optique et
- une deuxième position dans laquelle cette deuxième fibre optique est écartée de la première fibre optique,

et en ce que le dispositif comprend en outre des moyens de déplacement du deuxième support et de l'obturateur, ces moyens de déplacement étant prévus pour faire passer le dispositif d'un premier état où le deuxième support est dans sa première position et l'obturateur dans sa deuxième position à un deuxième état où le deuxième support est dans sa deuxième position et l'obturateur dans sa première position, et réciproquement.

On peut réaliser un dispositif conforme à la présente invention qui, lorsqu'il est inséré dans une liaison entre deux fibres optiques multimodes dont le coeur a un diamètre compris entre 50 micromètres et 1 millimètre, permet la transmission d'un faisceau lumineux continu (par opposition à un faisceau lumineux pulsé) dont la puissance peut aller jusqu'à 5 W environ, avec une atténuation optique comparable à celle que l'on obtient avec des connecteurs optiques classiques, quel que soit le sens de propagation du faisceau lumineux dans les fibres optiques.

Il est également possible de réaliser un dispositif conforme à la présente invention permettant l'interruption totale de la transmission d'un faisceau lumineux, jusqu'à des puissances lumineuses continues de 10 W, quel que soit le sens de propagation du faisceau dans les fibres optiques.

Les moyens de déplacement du dispositif objet de l'invention sont de préférence de type électromécanique.

Ces moyens de déplacement peuvent comprendre des premiers moyens d'actionnement prévus pour amener le deuxième support de sa première position à sa deuxième position et réciproquement.

Selon un premier mode de réalisation particulier du dispositif objet de l'invention, ces moyens de déplacement comprennent en outre des deuxièmes moyens d'actionnement qui sont prévus pour amener l'obturateur de sa deuxième position à sa première position et réciproquement et qui sont commandés par les premiers moyens d'actionnement.

Selon un deuxième mode de réalisation particulier du dispositif objet de l'invention, les moyens de déplacement comprennent en outre des moyens élastiques qui sont prévus pour amener l'obturateur de sa deuxième position à sa première position lorsque le deuxième support est amené de sa première position à sa deuxième position, l'obturateur étant ramené à sa deuxième position par le deuxième support lorsque ce dernier est ramené à sa première position.

Chacun des premier et deuxième supports peut être prévu pour recevoir et immobiliser une fiche optique dans laquelle se trouve la fibre optique correspondante.

Lorsque ces fiches optiques sont utilisées, le premier support peut comprendre en outre une sphère de centrage à perçage diamétral dans lequel est insérable une extrémité de la première fibre optique et dans lequel est insérée une extrémité de la deuxième fibre optique lorsque le deuxième support occupe sa première position.

En variante, également dans le cas où les fiches optiques sont utilisées, le premier support peut comprendre en outre un premier logement dans lequel est insérable une extrémité de la première fibre optique et un deuxième logement qui communique avec le premier logement et dans lequel le deuxième support est déplaçable en translation, les première et deuxième fibres optiques étant en quasi-contact lorsque le deuxième support occupe sa première position et que la première fibre optique est en place dans le premier support.

Le dispositif objet de l'invention peut comprendre en outre des moyens de commande des moyens de déplacement que comporte ce dispositif.

On a également résolu un problème important, à savoir le problème de la sécurité d'une liaison par fibres optiques comportant un dispositif conforme à la présence invention.

En effet, lorsqu'un faisceau lumineux de puissance importante, par exemple de l'ordre de 5 W, est susceptible d'être transmis par ces fibres optiques, il convient d'empêcher l'endommagement d'objets fragiles ou des yeux d'utilisateurs de la liaison optique qui pourraient se trouver sur la trajectoire du faisceau lumineux.

Pour résoudre ce problème important, les moyens de commande des moyens de déplacement sont munis de moyens de sécurité qui nécessitent à la fois l'accord d'un utilisateur placé d'un côté de la liaison optique et l'accord d'un utilisateur placé de l'autre côté de cette liaison optique pour que le dispositif passe en position de transmission (l'obturateur étant alors escamoté) et reste dans cette position de transmission.

Plus précisément, dans un dispositif conforme à l'invention, comportant les moyens de commande des moyens de déplacement ainsi que lesdites fiches optiques, ces moyens de commande comprennent de préférence un premier commutateur à deux positions, qui est placé du côté de la première fibre optique, et un deuxième commutateur à deux positions, qui est placé du côté de la deuxième fibre optique, et sont prévus pour commander le passage de l'obturateur à sa position escamotée seulement lorsque chaque fiche optique est immobilisée dans le support correspondant et que chacun de ces commutateurs est dans une position déterminée.

La présente invention sera mieux comprise à la lecture d'exemples de réalisation donnés ci-après à titre purement indicatif et nullement limitatif, en référence aux dessins annexés sur lesquels :
- la figure 1 est une vue schématique d'une liaison optique dans laquelle est inséré un dispositif de commutation conforme à la présente invention,
- la figure 2 est une vue schématique d'un premier mode de réalisation particulier du dispositif de commutation objet de l'invention à l'état ouvert (obturation),
- la figure 3 est une vue schématique de ce premier mode de réalisation particulier, à l'état fermé (transmission),
- la figure 4 est une vue en coupe schématique de la figure 2 suivant a,
- la figure 5 est une vue en coupe schématique de la figure 3 suivant b,
- la figure 6 illustre schématiquement des panneaux de commande situés respectivement aux deux extrémités de la liaison optique représentée sur la figure 1,
- la figure 7 est un schéma électrique de moyens de commande que comporte le dispositif de commutation inséré dans cette liaison optique, ces moyens de commande comprenant les panneaux représentés sur la figure 6,
- la figure 8 est une vue schématique d'un deuxième mode de réalisation particulier du dispositif objet de l'invention, à l'état fermé,
- la figure 9 est une vue schématique de ce deuxième mode de réalisation particulier, à l'état ouvert, et
- la figure 10 illustre un principe de connexion optique réglable qui est utilisable dans le dispositif représenté sur les figures 8 et 9.

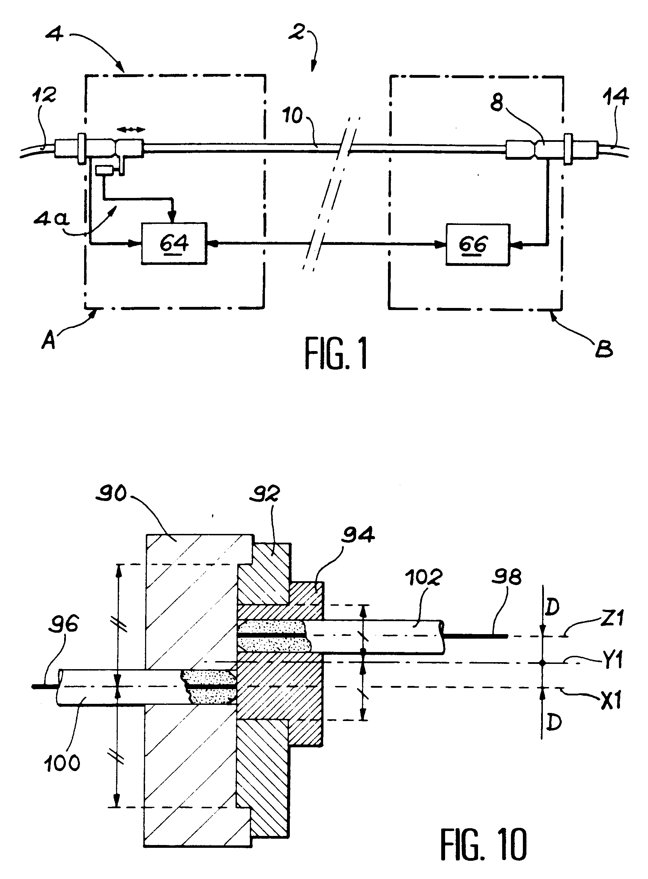

Sur la figure 1 on a représenté schématiquement une liaison 2 par fibres optiques, ou liaison optique.

Dans cette liaison optique 2 est inséré un dispositif de commutation 4 conforme à la présente invention.

La partie mécanique 4a de ce dispositif 4, qui permet l'interruption d'un faisceau lumineux se propageant dans les fibres optiques, peut être disposée à un endroit quelconque de cette liaison optique.

Dans l'exemple représenté sur la figure 1, cette partie 4a est située à l'une des deux extrémités de la liaison optique.

Le dispositif 4 comprend deux modules qui portent respectivement les références A et B et qui sont respectivement situés aux deux extrémités de la liaison optique.

Dans l'exemple de la figure 1, la partie mécanique 4a du dispositif 4 est située dans le module A.

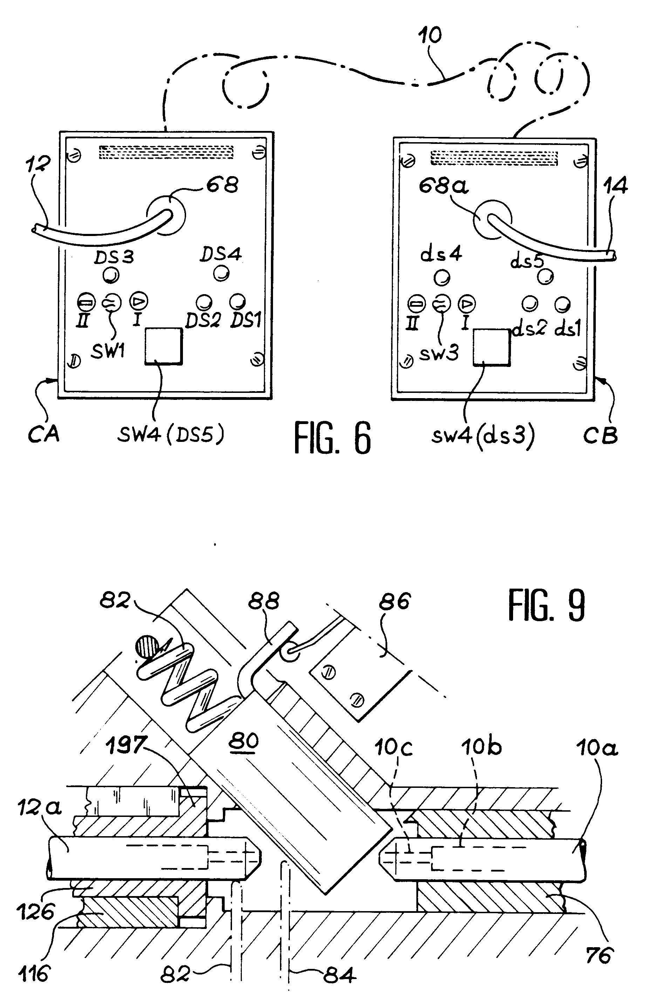

Ce module A comprend, outre cette partie mécanique 4a, un panneau de commande CA (voir figure 6), qui est manoeuvré par l'utilisateur situé du côté correspondant de la liaison optique 2.

Le module B comprend un connecteur optique fixe 8 ainsi qu'un panneau de commande CB (voir également la figure 6).

Ce panneau de commande CB est manoeuvré par l'utilisateur qui est situé du côté correspondant de la liaison optique.

L'interrupteur que constitue la partie mécanique 4a est réversible.

On voit sur la figure 1 que la liaison optique 2 comprend une fibre optique de liaison 10 qui aboutit, d'un côté, à la partie mécanique 4a du dispositif 4 et, de l'autre côté, au connecteur fixe 8.

Du côté du module A, une fibre optique 12 aboutit également à la partie mécanique 4a et, du côté du module B, une fibre optique 14 aboutit au connecteur 8 qui permet ainsi de relier optiquement la fibre 10 à la fibre 14.

Lorsque le dispositif 4 est à l'état ouvert, la liaison optique est interrompue.

Lorsque le dispositif 4 est à l'état fermé, la lumière peut passer de la fibre 12 à la fibre 14 par l'intermédiaire de la fibre 10 et l'on dit alors que le module A est émetteur et que le module B est récepteur.

Au contraire, la lumière peut aller de la fibre 14 à la fibre 12 par l'intermédiaire de la fibre 10 et l'on dit alors que le module B est émetteur et que le module A est récepteur.

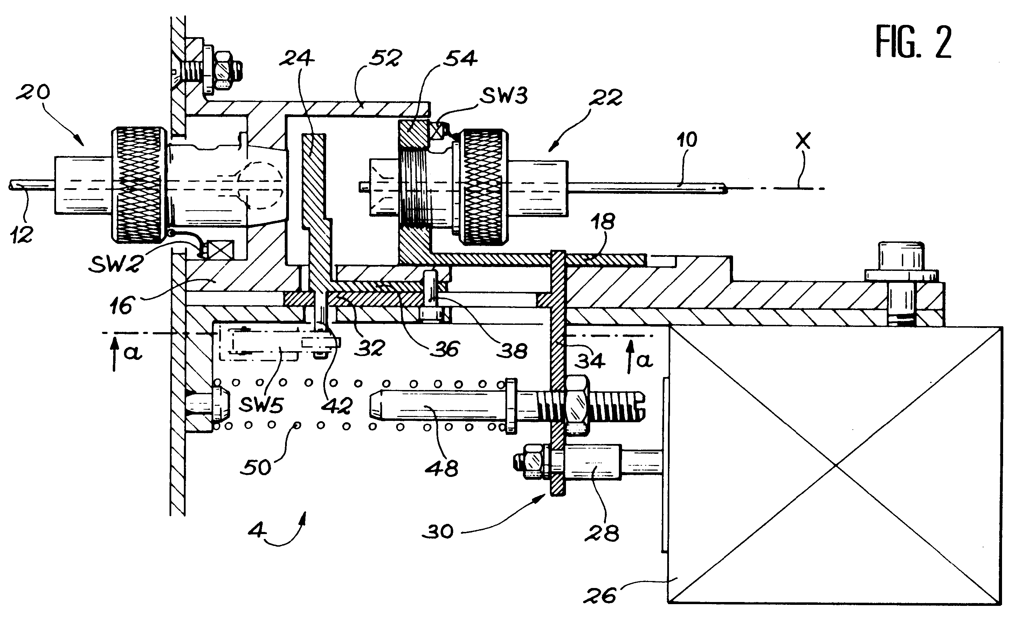

On va maintenant décrire le dispositif 4 en faisant référence aux figures 2 à 5.

Ce dispositif 4 comprend un support 16 qui est fixe et un support 18 qui est déplaçable en translation par rapport au support 16 suivant un axe X.

La fibre optique 12 est montée dans une fiche optique 20 et la fibre optique 10 est montée dans une fiche optique 22.

La fiche optique 20 est montée sur le support fixe 16 de façon que l'extrémité de la fibre optique 12, qui est située dans cette fiche 20, soit parallèle à l'axe X.

De la même façon, la fiche optique 22 est montée sur le support mobile 18 de façon que l'extrémité de la fibre optique 10, qui est située dans la fiche optique 22, soit parallèle à l'axe X et que les axes respectifs des fibres 10 et 12 soient confondus.

Le dispositif 4 comprend également un obturateur escamotable 24 qui est interposable entre les fiches optiques 20 et 22.

Cet obturateur 24 a pour fonction d'empêcher le faisceau lumineux transmis par l'une des fibres de passer dans l'autre fibre lorsque cet obturateur 24 est interposé entre les fiches 20 et 22.

Lorsque cet obturateur 24 est escamoté et ne se trouve donc plus entre les fiches optiques 20 et 22, le faisceau peut passer d'une fibre à l'autre.

Le dispositif 4 comprend également un vérin 26 qui commande le déplacement de l'obturateur 24 et qui commande aussi la translation du support 18 parallèlement à l'axe X.

Ce vérin 26 est de type électro-magnétique et comprend par exemple un électro-aimant à noyau mobile, ce noyau étant prolongé par la tige 28 du vérin 26.

Le dispositif 4 comprend également une came 30 qui comporte une âme 32 et une aile 34.

Un côté de l'aile 34 est rigidement solidaire de la tige 28 du vérin 26 et l'autre côté de cette aile 34 est rigidement solidaire du support déplaçable 18.

L'obturateur 24 est muni d'une aile 36 dont une extrémité est articulée en rotation autour d'un axe 38 rigidement solidaire du support fixe 16.

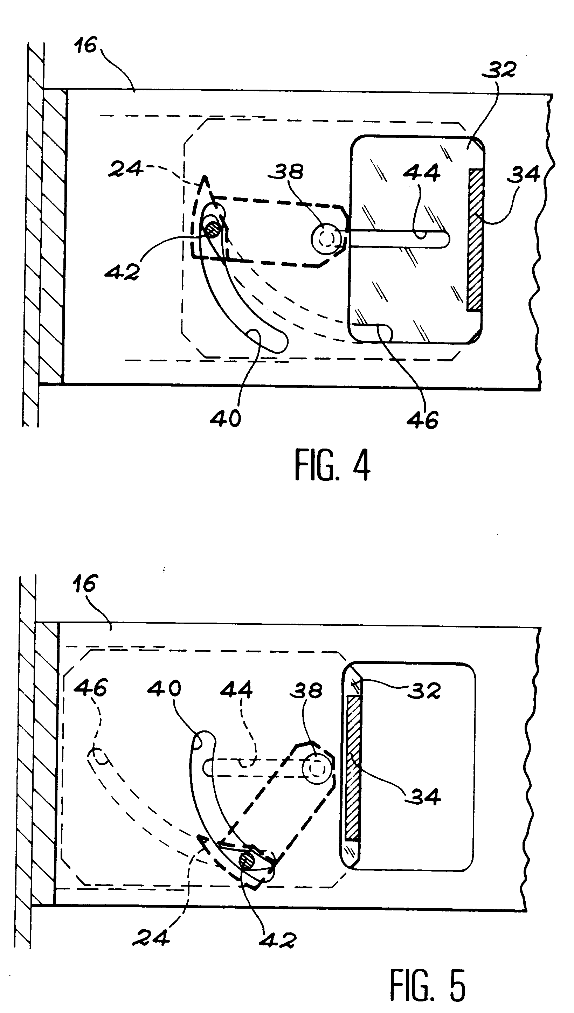

Ce support fixe 16 comporte un ajourage 40 (voir figures 4 et 5) en forme d'arc de cercle formant une rampe et l'obturateur 24 comporte également un téton 42 qui est déplaçable dans l'ajourage 40, entre les deux extrémités de ce dernier.

De plus, l'aile 32 de la came 30 comporte un premier ajourage 44 (voir figure 5) en forme de segment rectiligne qui est parallèle à l'axe X et qui est traversé par l'axe 38.

L'aile 32 de la came 30 comporte également un deuxième ajourage 46 de forme courbe qui a pour fonction d'induire le déplacement du téton 42 dans l'ajourage 40 du support fixe 16 lorsque la came 30 est déplacée grâce au mouvement de la tige 28 du vérin 26, cette tige 28 étant parallèle à l'axe X.

L'aile 34 de la came 30 porte une tige 48 (voir figure 2) qui est parallèle à l'axe X et sur laquelle est enfilée une extrémité d'un ressort hélicoïdal 50.

L'autre extrémité de ce ressort hélicoïdal 50 est fixée au support 16, en regard de la tige 48.

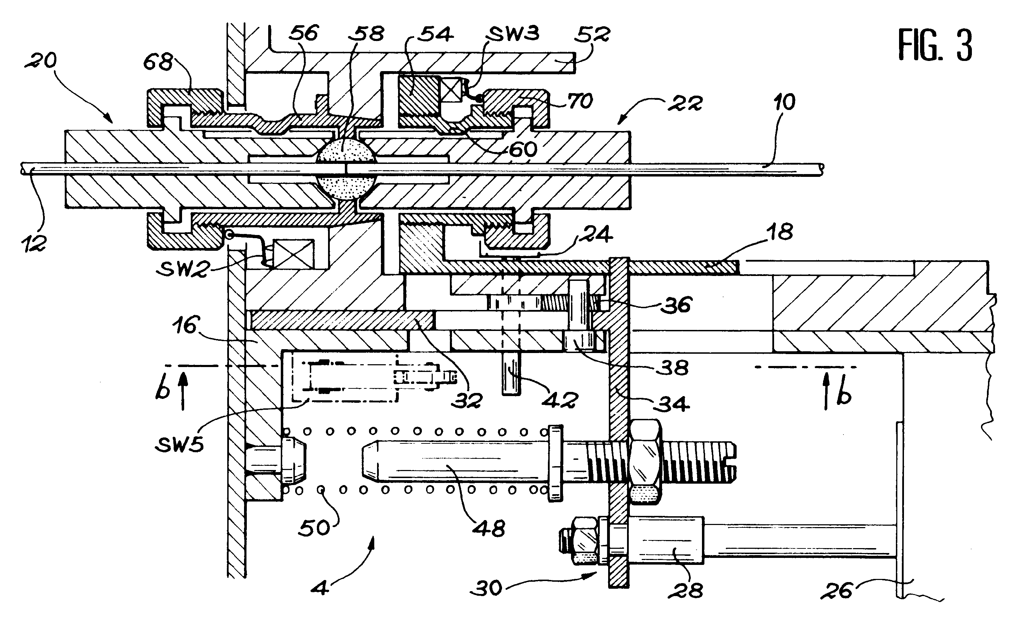

Dans l'exemple représenté sur les figures 2 et 3, le vérin 26 est tel que sa tige soit dans une position escamotée lorsqu'aucun courant électrique ne circule dans la bobine magnétique du vérin 26.

Dans cette position de la tige 28, le ressort 50 est détendu (voir figure 2).

Au contraire, lorsqu'on fait circuler un courant électrique (d'intensité suffisante) dans la bobine magnétique du vérin 26, la tige 28 de ce vérin 26 passe en position sortie et le ressort 50 est alors comprimé (voir figure 3).

On explique ci-après, de façon plus détaillée, le fonctionnement du dispositif 4.

Lorsqu'aucun courant ne circule dans la bobine magnétique du vérin 26, la tige 28 de ce dernier est en position escamotée, le ressort hélicoïdal 50 est détendu, la came 30 est dans sa position arrière, les fiches optiques 20 et 22 sont éloignées l'une de l'autre, le téton 42 occupe sa position haute dans l'ajourage 40 et l'obturateur 24 se trouve alors compris entre les fiches 20 et 22 (voir figures 2 et 4).

Au contraire, lorsque le courant électrique circule dans la bobine magnétique du vérin 26, la tige 28 de ce vérin 26 passe en position sortie et comprime le ressort hélicoïdal 50.

Alors, la came 30 passe à sa position avant, le téton 42 passe en position basse dans son ajourage 40, l'obturateur 24 passe en position escamotée et ne se trouve plus entre les fiches optiques 20 et 22 et la fiche 22 vient se raccorder à la fiche 20, d'où l'établissement d'une liaison optique entre les fibres optiques 10 et 12 et la possibilité du passage d'un faisceau lumineux d'une fibre à l'autre (voir les figures 3 et 5).

On voit sur les figures 2 et 3 que le dispositif 4 est conçu de manière qu'aucune fuite de lumière ne puisse se produire vers l'extérieur, quelle que soit la phase de fonctionnement de ce dispositif 4 et ce, pour des raisons de sécurité vis-à-vis des utilisateurs du dispositif 4.

Pour ce faire, on voit sur les figures 2 et 3 que le support fixe 16 comporte une sorte de boîte 52 à l'intérieur de laquelle se trouve constament l'extrémité de la fiche optique 22 destinée à être raccordée à une extrémité de la fiche optique 20.

Cette extrémité de la fiche optique 20 se trouve aussi dans la boîte 52.

De plus, la partie 54 du support 18, partie sur laquelle est montée la fiche optique 22, constitue pour la boîte 52 une sorte de couvercle qui est déplaçable en translation parallèlement à l'axe X dans cette boîte 52.

Bien entendu, la boîte 52 et la partie 54 du support 18 sont opaques vis-à-vis de la lumière susceptible d'être transmise par les fibres.

Ainsi, quel que soit l'état (ouvert ou fermé) du dispositif 4, cette lumière ne peut s'échapper de la boîte 52.

Dans l'exemple représenté sur les figures 2 et 3, les fiches optiques 20 et 22 et leurs moyens de connexion constituent une adaptation des connecteurs qui sont commercialisés par la société RADIALL dans la série PFO OPTABALL.

On voit sur la figure 3 que le raccord que comportent de tels connecteurs est tronqué d'un côté, juste après la sphère de centrage associée à ce raccord.

Dans le dispositif 4, ce raccord, qui porte la référence 56, est tronqué du côté du support déplaçable 18.

Ce raccord 56 tronqué est rigidement solidaire du support fixe 16 et conserve sa sphère de centrage 58 à perçage diamétral.

On voit sur la figure 3 que la partie 60, qui a été enlevée au raccord, est rendue rigidement solidaire de la partie 54 du support déplaçable 18.

Les fiches optiques 20 et 22 qui sont démontables, sont du genre de celles qui sont commercialisées par la société RADIALL dans la série PFO OPTABALL et comportent donc des extrémités concaves, en forme de cônes, prévues pour venir en contact avec la sphère de centrage 58 lorsque les supports 16 et 18 sont en position rapprochée (et, bien entendu, lorsque les fiches optiques 20 et 22 sont en place sur ces supports).

Les extrémités des fibres optiques 10 et 12, que l'on veut raccorder l'une à l'autre, s'étendent suivant les axes des extrémités coniques des fiches optiques 20 et 22.

Lorsque la fiche optique 20 est en place sur son support 16, l'extrémité de la fibre optique 12, que l'on veut connecter à une extrémité de la fibre optique 10, se trouve dans le perçage de la sphère de centrage 58.

Lorsque la fiche optique 22 est en place sur son support 18, cette extrémité de la fibre optique 10 se trouve également dans le perçage de la sphère de centrage 58 en regard de l'extrémité correspondante de la fibre optique 12 lorsque le support déplaçable 18 est dans sa position avancée, l'obturateur 24 étant alors escamoté.

Comme on le voit sur la figure 3, la partie tronquée 60 du raccord est en fait adaptée, de façon que la fiche optique 22 en émerge et puisse venir effectivement en contact avec la sphère 58.

En disposant un gel adaptateur d'indice entre les coeurs respectifs des fibres optiques 10 et 12 en regard l'un de l'autre, la perte d'insertion ne dépasse pas 0,5 dB pour des fibres optiques dont le diamètre de coeur vaut 50 micromètres.

Pour permettre l'utilisation de fibres optiques multimodes dont le diamètre de coeur peut atteindre 1 millimètre, les fiches optiques commercialisées sont modifiées, par remplacement du tube porte-fibre par un tube approprié à de telles fibres.

A titre purement indicatif et nullement limitatif, l'obturateur 24 a 3 millimètres d'épaisseur et se trouve à 5,5 millimètres de chacune des deux fibres lorsqu'il est interposé entre les fiches optique 20 et 22.

Le connecteur optique 8, qui est situé du côté du module B et qui permet la liaison optique entre les fibres 10 et 14, est par exemple un connecteur non modifié de la série PFO OPTABALL commercialisé par la société RADIALL.

On va maintenant donner un exemple de réalisation des moyens de commande du dispositif 4.

Ces moyens de commande comportent deux parties, à savoir une partie 64 située dans le module A et une partie 66 située dans le module B qui peut être très éloigné du module A (voir figure 1).

Bien entendu, ces moyens de commande sont réalisables en une seule partie mais, dans l'exemple représenté sur la figure 1, on utilise des moyens de commande en deux parties pour des questions de sécurité vis-à-vis des utilisateurs, qui ont déjà été abordées plus haut.

Lorsque la liaison optique 2 est utilisée, un opérateur est placé près du module A et un autre opérateur est placé près du module B.

Les moyens de commande 64, 66 comprennent divers capteurs qui permettent à chacun de ces deux opérateurs de connaître la position de l'obturateur 24 et de s'assurer du fait que chacune des fiches optiques 20 et 22 est convenablement verrouillée sur le support correspondant et que chacune des fiches optiques du connecteur 8 est également convenablement verrouillée sur le raccord du connecteur 8.

Pour ce faire, on utilise par exemple, en tant que capteurs, cinq microrupteurs, trois dans le dispositif 4 et deux dans le connecteur 8.

Plus précisément, comme on le voit sur les figures 2 et 3, un microrupteur SW2, qui est monté sur le support 16, décèle mécaniquement le verrouillage de la fiche optique 20 sur le raccord 56.

Ce microrupteur SW2 est fermé seulement lorsque ce verrouillage est réalisé, grâce à un écrou de serrage 68, la fiche optique 20 étant alors appliquée contre la sphère de centrage 58.

Un microrupteur SW3, qui est monté sur le support déplaçable 18, décèle mécaniquement le verrouillage de la fiche optique 22 sur ce support déplaçable 18.

Le microrupteur SW3 est fermé seulement lorsque ce verrouillage est réalisé, grâce à un écrou de serrage 70.

Un microrupteur SW5, qui est monté sur le support 16, décèle mécaniquement la mise de l'obturateur 24 en position d'obturation (entre les fiches optiques 20 et 22).

Ce microrupteur SW5 est fermé par le téton 42, seulement lorsque ce dernier est dans sa position haute dans l'ajourage 40.

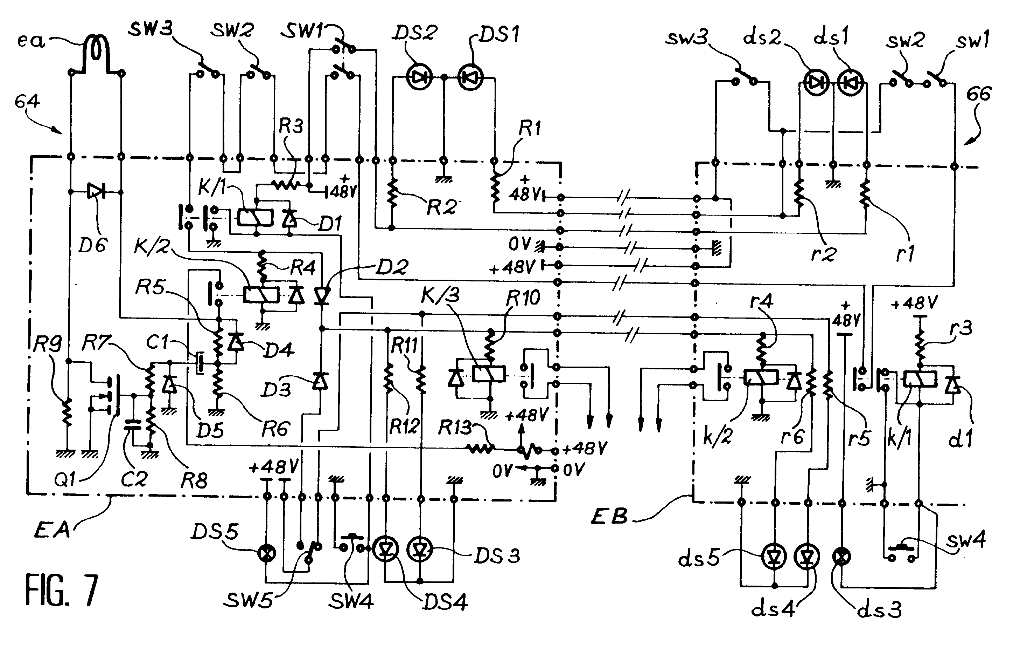

Dans le connecteur 8 du module B, un microrupteur sw1 (que l'on voit sur le schéma électrique de la figure 7) décèle mécaniquement le verrouillage de l'une des fiches optiques de ce connecteur 8, sur le raccord de ce connecteur 8.

Le microrupteur sw1 est l'homologue du microrupteur SW2 associé à la fiche optique 20 et l'on aperçoit sur la figure 6 l'écrou de serrage 68a de cette fiche optique du connecteur 8, cet écrou 68a se trouvant sur la face avant du panneau de commande CB, associé à la partie 66 des moyens de commande du dispositif 4.

On voit aussi sur la figure 6 l'écrou de serrage 68, qui est associé à la fiche optique 20 et qui se trouve sur la face avant du panneau de commande CA associé à la partie 64 des moyens de commande du dispositif 4.

Un microrupteur sw2, que l'on aperçoit sur le schéma électrique de la figure 7, décèle mécaniquement le verrouillage de l'autre fiche optique du connecteur 8 sur le raccord que comporte ce connecteur 8.

Cette autre fiche optique du connecteur 8 est située sur la face interne du panneau de commande CB.

Le microrupteur sw2 est l'homologue du microrupteur SW3 associé à la fiche optique 22 qui est présente dans le module A.

On va maintenant décrire les panneaux de commande CA et CB que l'on voit sur la figure 6.

Le panneau de commande CA comporte, sur sa face avant, un commutateur SW1 à deux positions I et II, des voyants lumineux DS1 (orange), DS2 (jaune), DS3 (vert) et DS4 (rouge), qui sont des diodes électroluminescences, ainsi qu'un bouton de réarmement SW4 (commutateur à deux positions) à voyant lumineux DS5.

Ce voyant lumineux est éclairé lorsque le commutateur SW4 est fermé, et éteint dans e cas contraire.

Le panneau de commande CB comporte, sur sa face avant, un commutateur sw3 à deux positions I et II, des voyants lumineux ds1 (ornage), ds2 (jaune), ds4 (vert) et ds5 (rouge), qui sont des diodes électroluminescentes, ainsi qu'un bouton de réarmement sw4 (commutateur à deux positions) à voyant lumineux ds3.

Ce voyant lumineux ds3 est allumé quand le commutateur sw4 est fermé, et éteint dans le cas contraire.

Lorsque l'opérateur qui est situé près du panneau de commande CA bascule le commutateur SW1 dans la position I, il indique qu'il donne son accord pour la transmission de lumière, c'est-à-dire pour le passage de l'obturateur 24 en position escamotée.

Alors, le voyant DS2 est allumé et il en est de même pour le voyant ds1, ce qui informe l'opérateur situé près du panneau de commande CB que l'autre opérateur est d'accord pour la transmission de lumière.

Si le commutateur SW1 est dans la position II, les voyants, DS2 et ds1 sont éteints.

Lorsque l'opérateur qui est situé près du panneau de commande CB bascule le commutateur sw3 dans la position I, il indique qu'il donne son accord pour la transmission de lumière.

Alors, le voyant ds2 s'allume et le voyant DS1 s'allume également, ce qui indique à l'opérateur situé près du panneau de commande CA que l'autre opérateur donne son accord pour la transmission de lumière.

Lorsque le commutateur sw3 est dans la position II les voyants ds2 et DS1 sont éteints.

Les voyants DS3 et ds4 sont allumés lorsque le dispositif 4 est en position d'obturation (l'obturateur 24 étant alors interposé entre les fiches optiques 20 et 22) et les deux opérateurs sont ainsi informés de cette obturation.

Lorsque l'obturateur 24 est escamoté, les voyant DS3 et ds4 sont éteints.

Les voyants DS4 et ds5 sont allumés lorsque le dispositif 4 n'est plus dans la position d'obturation (l'obturateur 24 étant alors escamoté et les fiches 20 et 22 optiquement connectées l'une à l'autre) et les deux opérateurs sont alors informés de la connexion des fiches 20 et 22 et donc de la possibilité du passage d'un faisceau lumineux d'une fibre à l'autre.

Les voyants DS4 et ds5 sont éteints lorsque l'obturateur 24 est interposé entre ces fiches optiques 20 et 22.

Les voyants DS4 et ds5 ne peuvent être allumés que si les voyants DS2 et ds2 le sont également (les commutateurs SW1 et sw3 étant alors tous deux en position I).

Les moyens de commande 64 et 66 sont par exemple alimentés par une tension électrique continue de 48 V.

A l'arrière du panneau de commande CA on trouve le dispositif 4 et donc la fiche optique 22 correspondant au support déplaçable 18 (lorsque cette fiche 22 est connectée).

On trouve également le circuit électrique EA associé aux divers voyants et commutateurs de la partie 64 des moyens de commande du dispositf 4.

A l'arrière du panneau de commande CB, on trouve, outre la fiche optique du connecteur 8 qui est raccordée à la fibre optique 10, le circuit électrique EB associé aux divers voyants et commutateurs de la partie 66 des moyens de commande du dispositif 4.

Pour que les moyens de commande 64, 66 soient alimentés il faut que la source externe, qui fournit la tension continue de 48 V soit en service et que les deux commutateurs SW4 et sw4 soient fermés, les voyants D5 et ds3 étant alors tous deux allumés.

Si, pour une raison ou pour une autre, il se produit une coupure d'alimentation électrique, les deux commutateurs SW4 et sw4 passent à l'état ouvert, les voyants correspondants D5 et ds3 s'éteignent et l'obturateur 24 passe à la position d'obturation (entre les fiches 20 et 22 qui sont alors éloignées l'une de l'autre) s'il ne s'y trouvait pas déjà.

Les deux commutateurs SW4 et sw4 restent à l'état ouvert lorsque la source de tension est à nouveau en service.

Il faut alors fermer les deux commutateurs SW4 et sw4 pour alimenter à nouveau les moyens de commande 64, 66.

Une telle disposition permet d'éviter le rétablissement de la transmission de lumière sans avertissement des deux opérateurs, après une coupure de courant.

L'état du dispositif 4, qui permet la transmission de lumière, ne peut être obtenu que si toutes les conditions suivantes sont réalisées :
a) la source de tension continue de 48 V est en service et les deux boutons de réarmement sont activés (fermeture des commutateurs SW4 et sw4 d'où l'allumage des voyants correspondants),
b) les commutateurs SW1 et sw3 sont tous deux dans la position I qui autorise le passage du faisceau lumineux et les deux voyants DS2 et ds2 sont alors allumés,
c) les deux fiches optiques du module B sont connectées l'une à l'autre et verrouillées dans cette position et les deux fiches optiques 20 et 22 du module A sont verrouillées sur leurs supports respectifs.

La condition de l'alinéa c) a pour but d'éviter qu'un faisceau lumineux puisse émerger du connecteur du module B ou du connecteur à fiche optique mobile du module A, lorsqu'une fiche optique n'est pas connectée.

Dans la phase de transmission de lumière, les voyants DS3 et ds4 sont éteints et les voyants DS4 et ds5 sont allumés.

Dans tous les autres cas, le dispositif 4 reste ou bascule dans la position d'obturation (obturateur 24 entre les fiches optiques 20 et 22).

Les voyants DS3 et ds4 sont alors allumés et les voyants DS4 et ds5 sont éteints.

Pour les opérateurs, la sécurité apportée par les moyens de commande du dispositif 4 est essentiellement liée aux voyants DS3 et ds4 qui "détectent" l'insertion complète (fin de course) de l'obturateur 24 entre les fiches optiques 20 et 22.

Lorsque ces voyants DS3 et ds4 sont allumés, le dispositif 4 est dans son état d'obturation (l'obturateur 24 se trouve entre les fiches optiques 20 et 22).

Lorsque ces voyants DS3 et ds4 sont éteints, il y a présomption de danger.

Les voyants DS4 et ds5 ont simplement une fonction d'information des opérateurs.

Sur le panneau de commande CA (respectivement CB) l'un des deux voyants DS3 et ds4 (respectivement ds4 et ds5) doit toujours être allumé.

En cas d'extinction simultanée de ces deux voyants, il convient de passer à la position II de l'interrupteur SW1 (respectivement sw3) et de vérifier ces voyants.

Il y a alors présomption de danger. Avec toutes les indications qui précèdent, les moyens de commande 64, 66 du dispositif 4, et en particulier les circuits électriques EA et EB qui sont respectivement associés aux parties 64 et 66 de ces moyens de commande, sont réalisables par l'homme du métier.

A titre purement indicatif et nullement limitatif, on a représenté sur la figure 7 un schéma électrique possible pour ces moyens de commande 64, 66.

Sur le schéma de la figure 7, on reconnaît les divers voyants et commutateurs mentionnés plus haut ainsi que la tension de 48 V donnée plus haut à titre d'exemple.

On voit également, sur ce schéma de la figure 7, la bobine magnétique e a de l'électro-aimant du vérin 26.

Dans ce schéma de la figure 7, on aperçoit un circuit destiné à éviter une consommation importante de courant électrique par le vérin 26 et un échauffement inutile de ce vérin 26.

Ce circuit réduit progressivement la tension aux bornes de la bobine magnétique e a de l'électro-aimant à une valeur calculée pour assurer le maintien de cet électro-aimant dans l'état correspondant à la position escamotée de l'obturateur 24, c'est-à-dire à l'état de transmission du dispositif 4.

Bien entendu, avec un électro-aimant à faible consommation électrique et faible échauffement, un tel circuit ne serait pas nécessaire.

Sur le schéma de la figure 7, les références R1 à R13 et r1 à r6 représentent des résistances électriques, les références D1 à D6 et d1 représentent des diodes, les références C1 et C2 représentent des condensateurs, la référence Q1 représente un transistor de puissance de type MOS, et les référence K/1 à K/3, k/1 et k/2 représentent des relais.

Un autre dispositif de commutation conforme à l'invention peut être utilisé à la place du dispositif de commutation 4 dans la liaison optique qui est représentée sur la figure 1.

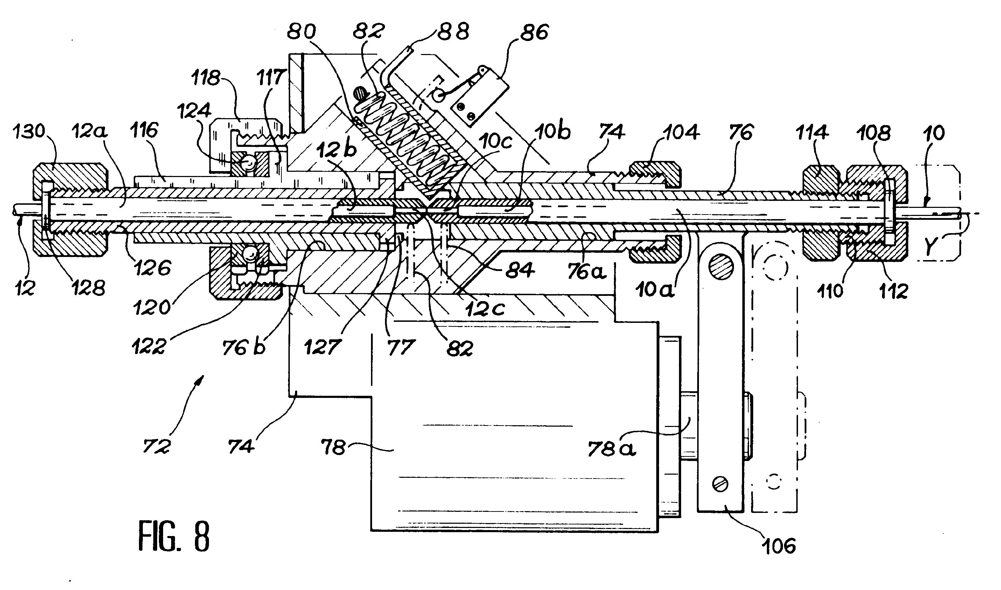

Sur la figure 8, cet autre dispositif de commutation 72 est représenté à l'état fermé, état dans lequel une liaison optique est établie entre les fibres optiques 10 et 12.

Au contraire, sur la figure 9, le dispositif de commutation 72 est représenté à l'état ouvert, état dans lequel la liaison entre les fibres optiques 10 et 12 est interrompue.

Le dispositif de commutation 72 comprend un support fixe 74 dans lequel est montée la fibre optique 12 et un support 76 dans lequel est montée la fibre optique 10 et qui est mobile en translation par rapport au support fixe 74 suivant un axe Y.

Lorsque les fibres optiques 10 et 12 sont montées dans leurs supports respectifs 76 et 74, les axes de ces fibres sont confondus avec cet axe Y.

Le dispositif de commutation 72 comprend également un vérin 78 qui est destiné à déplacer le support 76 d'une position dans laquelle les fibres optiques 10 et 12 sont proches l'une de l'autre (figure 8) à une position dans laquelle ces fibres sont écartées l'une de l'autre (figure 9), et réciproquement.

Dans l'exemple qui est représenté sur les figures 8 et 9, la position rapprochée des fibres optiques 10 et 12 correspond en fait à un quasi-contact entre ces fibres 10 et 12, c'est-a-dire à une distance inférieure à 1 micromètre entre ces fibres.

On a ainsi une meilleure transmission de lumière que dans le dispositif de commutation 4 qui a été décrit en faisant référence aux figures 2 à 5.

Bien entendu, pour améliorer encore la transmission, on peut prévoir une goutte de liquide adaptateur d'indice entre les deux fibres.

Le dispositif 72 comprend un obturateur 80 en forme de doigt creux, qui est apte à coulisser dans un logement prévu à cet effet dans le support fixe 74.

Comme on le voit sur les figures 8 et 9, ce logement du doigt creux est incliné par rapport à l'axe y en direction du support mobile 76 et un ressort hélicoïdal 82 est logé dans ce doigt creux.

Une extrémité de ce ressort 82 est fixée au support 74 tandis que l'autre extrémité du ressort 82 se trouve au fond du doigt creux.

Le vérin 78, qui est par exemple réalisé au moyen d'un électro-aimant, est tel que, lorsqu'on envoie un courant électrique (d'intensité suffisante) dans la bobine magnétique qu'il comporte, la fibre optique 10 est approchée de la fibre optique 12.

Alors l'obturateur 80 est repoussé dans son logement par le support mobile 76 et le ressort 82 est comprimé.

Au contraire, lorsque le courant électrique est coupé, la fibre optique 10 est éloignée de la fibre optique 12, le ressort 82 passe à l'état détendu et pousse l'obturateur 80 entre les fibres optiques 10 et 12.

Comme on le voit sur la figure 8, la fibre optique 10 (respectivement 12) est logée dans un embout ou ferrule 10a (respectivement 12a).

La fibre optique 10 (respectivement 12) comporte un surgainage 10b (respectivement 12b).

Ce surgainage est éliminé du côté de l'extrémité de chaque fibre optique qui est destinée à être en quasi-contact avec l'extrémité de l'autre fibre optique.

Ceci fait apparaître une partie de la gaine mécanique 10c (respectivement 12c) de la fibre optique 10 (respectivement 12) du côté de l'extrémité correspondante de l'embout 10a (respectivement 12a).

L'homme du métier est capable d'adapter les moyens de commande 64, 66 du dispositif 4 au cas du dispositif 72 (circuit électrique avec microrupteurs, panneaux de commande, commutateurs et voyants lumineux) avec des fonctions de sécurité analogues vis-à-vis des opérateurs respectivement placés du côté du module A (dans lequel se trouverait le dispositif 72) et du côté du module B.

En particulier, on voit sur la figure 8 des microrupteurs 82, 84 et 86 qui détectent respectivement le verrouillage de la fibre optique 12 sur le support correspondant 74, le verrouillage de la fibre optique 10 sur le support correspondant 76 et la position d'obturation (interposition entre les fibres 10 et 12) de l'obturateur 80.

Cette position d'obturation est détectée grâce à un téton 88 dont est muni l'obturateur 80 et qui vient en contact avec le microrupteur 86 seulement lorsque l'obturateur 80 est dans sa position d'obturation, entre les fibres 10 et 12 (qui sont alors éloignées l'une de l'autre).

Les microrupteurs 82, 84 et 86 sont respectivement les homologues des microrupteurs SW2, SW3 et SW5 que l'on voit sur la figure 2.

On voit sur les figures 8 et 9 que le microrupteur 82 (respectivement 84) passe à l'état fermé seulement lorsque l'extrémité de l'embout 12a (respectivement 10a) vient en contact avec ce microrupteur.

Bien entendu, du côté du module B, le connecteur optique 8 qui permet d'assurer la liaison entre les fibres 10 et 14 est encore muni de deux microrupteurs comme on l'a expliqué plus haut.

On donne ci-après des précisions sur la montage des fibres optique 10 et 12 dans leurs supports respectifs 76 et 74 et sur le réglage du positionnement relatif de ces fibres pour aboutir à un quasi-contact entre celles-ci et donc à de très faibles pertes d'insertion.

Le principe du positionnement relatif des fibres 10 et 12 permettant d'obtenir de très faibles pertes d'insertion va d'abord être expliqué en faisant référence à la figure 10.

Le dispositif que l'on voit sur la figure 10 comprend un premier support 90, un deuxième support 92 et un troisième support 94.

Ce dispositif représenté sur la figure 10 est destiné à raccorder deux fibres optiques 96 et 98 dont les extrémités que l'on veut raccorder sont respectivement montées dans des embouts ou ferrules 100 et 102.

Le support 90 est pourvu d'un perçage axial dans lequel est logé et fixé (par collage par exemple) l'embout 100 de la fibre 96.

Le support 92 est apte à tourner autour de son axe qui est confondu avec l'axe X1 du support 90.

Le support 94, de forme cylindrique, est monté tournant dans un perçage que comporte le support 92 et dont l'axe Y1 est à une distance D de l'axe X1.

Cette distance D est par exemple de l'ordre de 0,3 millimètre à 0,5 millimètre.

L'axe du support 94 est confondu avec l'axe Y1 qui est parallèle à l'axe X1.

Le support 94 comporte lui-même un perçage dans lequel est logé et fixé (par collage par exemple) l'embout 102 de la fibre 98 et dont l'axe Z1 est parallèle à l'axe Y1 et situé à la distance D de cet axe Y1.

L'axe de la fibre 98 est confondu avec l'axe Z1 du perçage du support 94.

On voit que, par des rotations appropriées des supports 92 et 94 autour de leurs axes respectifs X1 et Y1, on peut, dans tous les cas, faire coïncider les axes respectifs des fibres optiques 96 et 98, c'est-à-dire les axes des coeurs de ces fibres.

On revient maintenant aux figures 8 et 9 où le principe illustré par la figure 10 est mis en oeuvre.

Comme on le voit sur la figure 8, l'embout 10a est fixé au support 76 et ce support 76 est solidaire de la tige 78a du vérin 78 qui est déplaçable parallèlement à l'axe Y.

Un déplacement de cette tige 78a parallèlement à cet axe Y entraîne également un déplacement du support 76 parallèlement à l'axe Y.

Ce support 76 est déplaçable, entre deux positions correspondant respectivement à la position d'obturation et à la position de transmission du dispositif 72, dans un logement 76a qui est réalisé dans le support 74 et dont l'axe est l'axe Y.

La fin de course du support 76 (correspondant à la position d'obturation) est définie par un écrou 104 qui est vissé sur le support 74 et contre lequel le support 76 vient en butée lorsque le vérin 78 commande l'écartement de la fibre 10 par rapport à la fibre 12.

Le support 76 se prolonge au-delà de la pièce 106 qui le relie de façon articulée à la tige 78a du vérin 78.

L'extrémité du support 76, qui est située au-delà de cette pièce 106, est pourvue d'un filetage.

L'embout 10a dépasse de cette extrémité du support 76 et comporte un épaulement 108 qui est pris entre un écrou 110 vissé sur ce filetage et un écrou de blocage 112.

Ce dernier est lui-même vissé sur l'écrou 110 qui est fileté extérieurement à cet effet.

De plus, un contre-écrou 114, qui est situé entre la pièce 106 et l'écrou 110, est également vissé sur le filetage du support 76.

On comprend que l'on peut régler la position de la fibre optique 10 par rapport à la position de la fibre optique 12 par des vissages et des dévissages appropriés des écrous 110 et 112 et en bloquant, grâce au contre-écrou 114, l'embout 10a lorsque la position relative souhaitée pour les fibres 10 et 12 est obtenue.

On voit sur la figure 8 que le logement 76a qui est réalisé dans le support 74 est prolongé par un autre logement 76b qui est également réalisé dans le support 74.

L'axe de cet autre logement 76b est confondu avec l'axe Y et le logement 76b comporte un épaulement interne 77 à l'endroit où il débouche dans le logement 76a.

Le logement 76b reçoit un support 116 que l'on peut faire tourner dans ce logement 76b autour de l'axe Y.

Cependant, pour l'utilisation du dispositif de commutation 72, le support 116 est immobilisé par rapport au support 74 d'une manière qui sera expliquée par la suite.

Le support 116 est pourvu d'un perçage dont l'axe est parallèle à l'axe Y mais légèrement décalé par rapport à ce dernier.

Dans ce perçage du support 116 est logé un autre support 126 dans lequel est fixé l'embout 12a, l'axe de la fibre optique correspondante 12 étant confondu avec l'axe du support 126.

Du côté des extrémités des fibres optiques destinées à venir en quasi-contact l'une avec l'autre, le support 126 comporte un épaulement phériphérique externe 127 qui, lors de l'utilisation du dispositif de commutation 72 est bloqué entre l'épaulement interne 77 de l'alésage 76b et l'extrémité du support 116 qui se trouve dans cet alésage 76b.

Pour ce faire, le support 116 comporte un épaulement externe 117 et, comme on le voit sur la figure 8, le dispositif 72 est muni d'un écrou de blocage 118 et d'un ensemble qui forme une rondelle de serrage.

Cet ensemble comprend deux flasques 120 et 122 et, entre ces flasques, une rondelle compressible 124.

Cet ensemble, formant une rondelle de serrage, est compris entre l'écrou de blocage 118 et l'épaulement externe 117 du support 116.

Ainsi, en vissant l'écrou de blocage 118 sur un filetage prévu à cet effet sur le support 74, il est possible de bloquer le support 126.

Comme on le voit sur la figure 8, à l'extrémité de ce support 126, qui est située en-dehors du support 116, l'embout 12a comporte un épaulement externe 128 qui est immobilisé contre cette extrémité du support 126 grâce à un écrou de blocage 130.

L'épaulement 128 est bloqué entre le support 126 et l'écrou 130 par vissage de ce dernier sur un filetage prévu à cet effet sur le support 126.

En comparant la figure 8 à la figure 10, on voit que le support 76, le support 116, le support 126 et l'axe Y correspondent respectivement au support 90, au support 92, au support 94 et à l'axe X1 de la figure 10.

Pour régler le dispositif 72 et optimiser la transmission de lumière d'une fibre optique à l'autre, on peut procéder de la manière indiquée ci-après.

On met en place l'embout 10a et sa fibre 10 dans le support 76.

On monte l'embout 12a et sa fibre 12 dans le support 126.

On monte ce support 126 dans le support 116 puis on met en place ce dernier dans le support 74.

On met le vérin 78 dans l'état qui correspond à l'état de transmission du dispositif de commutation 72.

Ainsi, les deux extrémités des fibres optiques 10 et 12 sont proches l'une de l'autre.

On envoie alors de la lumière dans l'autre extrémité de l'une des fibres optiques 10 et 12, par exemple la fibre 10, et l'on détecte cette lumière à l'autre extrémité de la fibre optique 12.

On cherche à obtenir un maximum relatif de lumière à la sortie de la fibre optique 12 grâce à des rotations appropriées des supports 116 et 126 autour de leurs axes respectifs, ce maximum relatif de lumière correspondant à la mise en coïncidence des axes respectifs des fibres optiques 10 et 12.

Ceci étant obtenu, on bloque l'embout 12a par rapport au support 74, grâce à l'écrou de blocage 118, puis on réalise le quasi-contact entre les fibres optiques 10 et 12.

Pour ce faire, on déplace l'embout 10a dans son support 76 jusqu'à obtenir l'optimum de l'intensité lumineuse qui sort de la fibre optique 12.

Lorsque cet optimum est obtenu, on bloque l'embout 10a dans le support 76 grâce au contre-écrou 114.

Dans le mode de réalisation de l'invention qui est décrit en faisant référence aux figures 8 à 10, on utilise de préférence, en tant que connecteur 8, un connecteur du genre de celui que l'on vient de décrire en ce qui concerne les fibres optiques 10 et 12 dans le module A et ce, afin d'optimiser la liaison optique entre les fibres optiques 12 et 14 par l'intermédiaire de la fibre optique 10.

Alors, le connecteur optique 8 est du genre de celui que l'on voit sur la figure 8 à ceci près que ce connecteur 8 ne comporte pas le vérin 78, ni la pièce 106 qui relie ce vérin 78 au support 76, ni l'obturateur 80, ni le ressort 82 (ni le microrupteur 86).

En effet, dans le module B, les fibres optiques 10 et 14 restent constamment fixes l'une par rapport à l'autre.

## Revendications

1. Dispositif de commutation optique prévu pour établir ou interrompre une liaison optique entre des fibres optiques, ce dispositif comprenant :
- un premier support (16, 74) prévu pour recevoir une première fibre optique (12),
- un deuxième support (18, 76) prévu pour recevoir une deuxième fibre optique (10), l'axe de cette dernière étant alors confondu avec l'axe de la première fibre optique, et
- un obturateur mobile (24, 80), interposable entre les première (12) et deuxième (10) fibres optiques lorsque celles-ci sont respectivement montées sur les premier (16, 74) et deuxième (18, 76) supports, l'obturateur (24, 80) étant apte à occuper
- une première position dans laquelle il est interposé entre les première et deuxième fibres optiques et empêche alors le passage de lumière d'une fibre à l'autre, et
- une deuxième position dans laquelle il est escamoté et permet alors ce passage de lumière,
ce dispositif étant caractérisé en ce que le deuxième support (18, 76) est déplaçable en translation par rapport au premier support, parallèlement à l'axe des fibres optiques, entre
- une première position dans laquelle la deuxième fibre optique est proche de la première fibre optique et
- une deuxième position dans laquelle cette deuxième fibre optique est écartée de la première fibre optique,
et en ce que le dispositif comprend en outre des moyens (26-28-30-42, 78-78a-106-82) de déplacement du deuxième support (18, 76) et de l'obturateur (24, 80), ces moyens de déplacement étant prévus pour faire passer le dispositif d'un premier état où le deuxième support est dans sa première position et l'obturateur dans sa deuxième position à un deuxième état où le deuxième support est dans sa deuxième position et l'obturateur dans sa première position, et réciproquement.

2. Dispositif selon la revendication 1, caractérisé en ce que les moyens de déplacement comprennent des premiers moyens d'actionnement (26-28-30, 78-78a-106) prévus pour amener le deuxième support (18, 76) de sa première position à sa deuxième position et réciproquement.

3. Dispositif selon la revendication 2, caractérisé en ce que les moyens de déplacement comprennent en outre des deuxièmes moyens d'actionnement (42) qui sont prévus pour amener l'obturateur (24) de sa deuxième position à sa première position et réciproquement et qui sont commandés par les premiers moyens d'actionnement (26-28-30).

4. Dispositif selon la revendication 2, caractérisé en ce que les moyens de déplacement comprennent en outre des moyens élastiques (82) qui sont prévus pour amener l'obturateur (80) de sa deuxième position à sa première position lorsque le deuxième support est amené de sa première position à sa deuxième position, l'obturateur étant ramené à sa deuxième position par le deuxième support (76) lorsque ce dernier est ramené à sa première position.

5. Dispositif selon la revendication 1, caractérisé en ce que chacun des premier et deuxième supports est prévu pour recevoir et immobiliser une fiche optique (20, 22; 12a, 10a) dans laquelle se trouve la fibre optique correspondante (12, 10).

6. Dispositif selon la revendication 5, caractérisé en ce que le premier support comprend en outre une sphère de centrage (58) à perçage diamétral dans lequel est insérable une extrémité de la première fibre optique (12) et dans lequel est insérée une extrémité de la deuxième fibre optique (10) lorsque le deuxième support occupe sa première position.

7. Dispositif selon la revendication 5, caractérisé en ce que le premier support comprend en outre un premier logement (76b) dans lequel est insérable une extrémité de la première fibre optique (12) et un deuxième logement (76a) qui communique avec le premier logement et dans lequel le deuxième support (76) est déplaçable en translation, les première et deuxième fibres optiques (12, 10) étant en quasi-contact lorsque le deuxième support (76) occupe sa première position et que la première fibre optique (12) est en place dans le premier support (74).

8. Dispositif selon la revendication 1, caractérisé en ce qu'il comprend en outre des moyens de commande (64, 66) des moyens de déplacement (26-28-30-42, 78-78a-106-82).

9. Dispositif selon la revendication 5, caractérisé en ce qu'il comprend en outre des moyens de commande (64, 66) des moyens de déplacement (26-28-30-42, 78-78a-106-82) et en ce que ces moyens de commande comprennent un premier commutateur (SW1) à deux positions, qui est placé du côté de la première fibre optique (12), et un deuxième commutateur (sw3) à deux positions, qui est placé du côté de la deuxième fibre optique (10), et en ce que les moyens de commande sont prévus pour commander le passage de l'obturateur (24, 80) à sa position escamotée seulement lorsque chaque fiche optique est immobilisée dans le support correspondant et que chacun de ces commutateurs est dans une position déterminée.

## Patentansprüche

1. Anordnung zum optischen Schalten, vorgesehen zur Herstellung oder Unterbrechung einer optischen Verbindung zwischen zwei Glasfasern, wobei diese Anordnung umfaßt:
- einen ersten Träger (16, 74), vorgesehen um eine erste Glasfaser (12) aufzunehmen,
- einen zweiten Träger (18, 76), vorgesehen um eine zweite Glasfaser (10) aufzunehmen, wobei die Achse dieser letzteren dann zusammenfällt mit der Achse der ersten Glasfaser, und
- eine beweglichen Verschlußblende (24, 80), einschaltbar zwischen die erste (12) und zweite (10) Glasfaser, wenn diese jeweils an dem ersten (16, 74) und zweiten (18, 76) Träger angebracht sind, wobei die Verschlußblende (24, 80) fähig ist
- eine erste Stellung einzunehmen, in der sie eingeschaltet -bzw. eingeführt ist zwischen die erste und die zweite Glasfaser und dann den Durchgang des Licht von einer Faser zur anderen verhindert, und
- eine zweite Stellung einzunehmen, in der sie beseitigt bzw. zurückgezogen ist und dann den Durchgang des Lichts zuläßt,
**dadurch gekennzeichnet**,
daß der zweite Träger (18, 76) bezüglich des ersten Trägers in Längsrichtung verschiebbar ist, parallel zur Achse der Glasfasern, zwischen
- einer ersten Stellung, in der die zweite Glasfaser der ersten Glasfaser nahe ist und
- einer zweiten Stellung, in der diese zweite Glasfaser von der ersten Glasfaser entfernt ist, und dadurch, daß die Anordnung außerdem Einrichtungen (26-28-30-42, 78-78a-106-82) zum Verstellen des zweiten Trägers (18, 76) und der Verschlußblende (24, 80) umfaßt, wobei diese Verstelleinrichtungen vorgesehen sind, um die Anordnung aus einem ersten Zustand, bei dem der zweite Träger in seiner ersten Stellung ist und die Verschlußblende in ihrer zweiten Stellung, in ihren zweiten Zustand zu versetzen, bei dem der zweite Träger in seiner zweiten Stellung ist und die Verschlußblende in ihrer ersten Stellung, und umgekehrt.

2. Anordnung nach Anspruch 1, dadurch gekennzeichnet, daß die Verstelleinrichtungen erste Betätigungseinrichtungen (26-28-30, 78-78a-106) umfassen, vorgesehen um den zweiten Träger (18, 76) aus seiner ersten Stellung in seine zweite Stellung zu bringen und umgekehrt.

3. Anordnung nach Anspruch 2, dadurch gekennzeichnet, daß die Verstelleinrichtungen außerdem zweite Betätigungseinrichtungen (42) umfassen, vorgesehen um die Verschlußblende (24) aus ihrer zweiten Stellung in ihre erste Stellung zu bringen und umgekehrt, die gesteuert werden durch die ersten Betätigungseinrichtungen (26-28-30).

4. Anordnung nach Anspruch 2, dadurch gekennzeichnet, daß die Verstelleinrichtungen außerdem elastische Einrichtungen (82) umfassen, vorgesehen um die Verschlußblende (80) aus ihrer zweiten Stellung in ihre erste Stellung zu bringen, wenn der zweite Träger aus seiner ersten Stellung in seine zweite Stellung gebracht wird, wobei die Verschlußblende durch den zweiten Träger (76) zurückgebracht wird in ihre zweite Stellung, wenn dieser letztere zurückgebracht wird in seine erste Stellung.

5. Anordnung nach Anspruch 1, dadurch gekennzeichnet, daß sowohl der erste als auch der zweite Träger vorgesehen ist, einen optischen Stecker (20, 22; 12a, 10a) aufzunehmen und festzuhalten, in dem sich die entsprechende Glasfaser (12, 10) befindet.

6. Anordnung nach Anspruch 5, dadurch gekennzeichnet, daß der erste Träger außerdem eine Zentrierungskugel (58) mit diametraler Durchbohrung enthält, in die ein Ende der ersten Glasfaser (12) eingeführt werden kann, und in die ein Ende der zweiten Glasfaser (10) eingeführt wird, wenn der zweite Träger seine erste Stellung einnimmt.

7. Anordnung nach Anspruch 5, dadurch gekennzeichnet, daß der erste Träger außerdem einen ersten Sitz (76b) aufweist, in den ein Ende der ersten Glasfaser (12) eingeführt werden kann, und einen zweiten Sitz (76a), der verbunden ist mit dem ersten Sitz und in dem der zweite Träger (76) in Längsrichtung verschiebbar ist, wobei die erste und die zweite Glasfaser (12, 10) in Quasi-Kontakt sind, wenn der zweite Träger (76) seine erste Stellung einnimmt und wenn die erste Glasfaser (12) im ersten Träger (74) angebracht ist.

8. Anordnung nach Anspruch 1, dadurch gekennzeichnet, daß sie außerdem Steuereinrichtungen (64, 66) der Verstelleinrichtungen (26-28-30-42, 78-78a-106-82) umfaßt.

9. Anordnung nach Anspruch 5, dadurch gekennzeichnet, daß sie außerdem Steuereinrichtungen (64, 66) der Verstelleinrichtungen (26-28-30-42, 78-78a-106-82) umfaßt, und daß diese Steuereinrichtungen einen ersten Zweistellungswahlschalter (SW1) enthalten, angeordnet auf der Seite der ersten Glasfaser (12), und einen zweiten Zweistellungswahlschalter (sw3), angeordnet auf der Seite der zweiten Glasfaser (10), und daß die Steuereinrichtungen vorgesehen sind, um den Übergang der Verschlußblende (24, 80) in ihre zurückgezogene Stellung nur zu betätigen, wenn jeder optische Stecker festgehalten wird in dem entsprechenden Träger und jeder von diesen Schaltern in einer bestimmten bzw. festgelegten Stellung ist.

## Claims

1. Optical switching device designed to establish or interrupt an optical link between optical fibres, this device comprising:
- a first support (16, 74) designed to receive a first optical fibre (12),
- a second support (18, 76) designed to receive a second optical fibre (10), the axis of the latter thus being coincident with the axis of the first optical fibre, and
- a moving shutter (24, 80) which can be interposed between the first (12) and second (10) optical fibres when these are respectively mounted on the first (16, 74) and second (18, 76) supports, the shutter (24, 80) being capable of occupying
- a first position in which it is interposed between the first and second optical fibres and thus prevents the passage of light from one fibre to the other, and
- a second position in which it is retracted and thus allows this passage of light,
this device being characterized in that the second support (18, 76) can be moved in terms of translation with respect to the first support, parallel to the axis of the optical fibres, between
- a first position in which the second optical fibre is close to the first optical fibre, and
- a second position in which this second optical fibre is distant from the first optical fibre,
and in that the device further comprises means (26-28-30-42, 78-78a-106-82)for moving the second support (18, 76) and the shutter (24, 80), these movement means being designed in order to cause the device to pass from a first state in which the second support is in its first position and the shutter is in its second position, to a second state in which the second support is in its second position and the shutter is in its first position, and vice versa.

2. Device according to Claim 1, characterized in that the movement means comprise first actuating means (26-28-30, 78-78a-106) designed to bring the second support (18, 76) from its first position into its second position and vice versa.

3. Device according to Claim 2, characterized in that the movement means further comprise second actuating means (42) which are designed to bring the shutter (24) from its second position into its first position and vice versa, and which are controlled by the first actuating means (26-28-30).

4. Device according to Claim 2, characterized in that the movement means further comprise elastic means (82) which are designed to bring the shutter (80) from its second position into its first position when the second support is brought from its first position into its second position, the shutter being returned to its second position by the second support (76) when the latter is returned to its first position.

5. Device according to Claim 1, characterized in that each of the first and second supports is designed to receive and to immobilize an optical plug (20, 22; 12a, 10a) in which the corresponding optical fibre (12, 10) can be found.

6. Device according to Claim 5, characterized in that the first support further comprises a centring sphere (58) with a diametral hole into which one end of the first optical fibre (12) can be inserted and into which one end of the second optical fibre (10) is inserted when the second support occupies its first position.

7. Device according to Claim 5, characterized in that the first support further comprises a first housing (76b) into which one end of the first optical fibre (12) can be inserted, and a second housing (76a) which communicates with the first housing and in which the second support (76) can be moved in terms of translation, the first and second optical fibres (12, 10) almost being in contact when the second support (76) occupies its first position and the first optical fibre (12) is in place in the first support (74).

8. Device according to Claim 1, characterized in that it further comprises means (64, 66) for controlling the movement means (26-28-30-42, 78-78a-106-82).

9. Device according to Claim 5, characterized in that it further comprises means (64, 66) for controlling the movement means (26-28-30-42, 78-78a-106-82) and in that these control means comprise a first two-position switch (SW1) which is placed on the same side as the first optical fibre (12), and a second two-position switch (sw3) which is placed on the same side as the second optical fibre (10), and in that the control means are designed to control the passage of the shutter (24, 80) to its retracted position solely when each optical plug is immobilized in the corresponding support and each of these switches is in a defined position.
